# EUROPÄISCHE PATENTANMELDUNG

(11) **EP 1 110 805 A1**
(43) Veröffentlichungstag der Anmeldung: **27.06.2001**
(21) Anmeldenummer: 00126991.9
(22) Anmeldetag: 08.12.2000
(51) Int. Cl.: B60N 2/14, B60N 2/38, B66F 9/075

(54) **Schwenksitz**

(30) Priorität: 23.12.1999 DE 19962714
(71) Anmelder: STILL GMBH, D-22113 Hamburg (DE)
(72) Erfinder: Tügel, Caspar, Dipl.-Ing., 20253 Hamburg (DE); Schröder, Werner-Georg, 63762 Grossostheim (DE); Schäfer, Arno, Dipl.-Ing., 22049 Hamburg (DE); Ballhausen, Stephan, Dipl.-Ing., 22609 Hamburg (DE)
(74) Vertreter: Kasseckert, Rainer

(57) **Zusammenfassung**

Die Erfindung betrifft einen Gabelstapler, insbesondere Frontgabelstapler, mit einem Fahrersitz (2), der in Normalposition um einen Winkel von 0° bis 30° zur Fahrzeuglängsachse schräg gestellt und um eine vertikale Drehachse um einen gewissen Winkel bis zu maximal 90° verschwenkbar gelagert ist. Erfindungsgemäß ist die Drehachse im Bereich der Sitzvorderkante oder knapp vor dem Sitz (2) und auf der rechten Seite des Sitzes (2) angeordnet.

## Beschreibung

Die Erfindung betrifft einen Gabelstapler, insbesondere einen Frontgabelstapler, mit einem Schwenksitz nach dem Oberbegriff des Anspruchs 1.

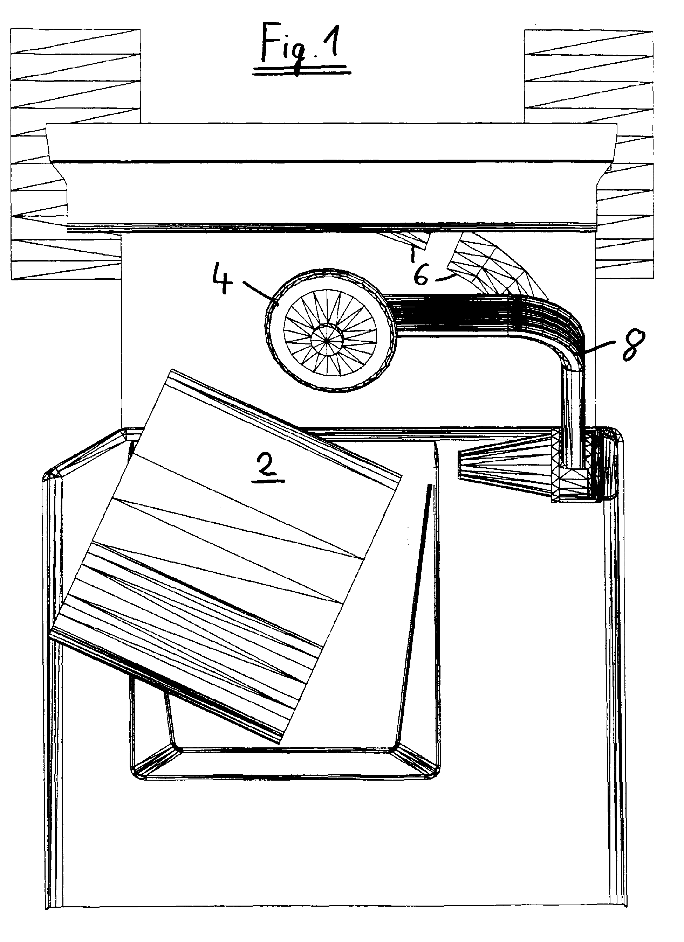

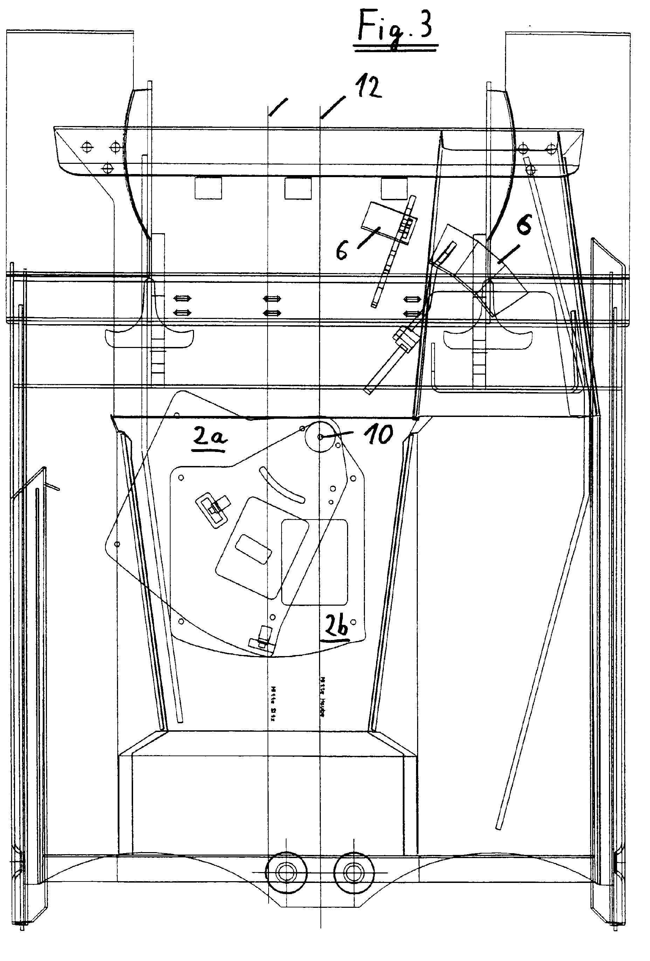

Gabelstapler mit Schwenksitzen sind z.B. aus der DE 196 50 338 A1 bekannt. In einer Variante (dort Figur 1) ist der Schwenksitz um eine Achse schwenkbar, die im Bereich der Pedale liegt. Auf diese Weise muß nur ein Pedalsatz verwendet werden. Figur 3 dieser Anmeldung zeigt eine weitere Variante, bei der der Schwenksitz um eine Achse schwenkbar ist, die zwischen dem Sitz und den Pedalen angeordnet ist. Dabei dreht sich auch die Fußplatte, auf der die Füße (und/oder die Pedale) angeordnet sind.

Aus der DE 197 28 312 C1 ist ein Gabelstapler mit Schwenksitz bekannt, bei dem eine Art Mast am Gabelstapler angeordnet ist, wobei der Mast eine nach hinten auskragende Konsole trägt, auf der der Sitz zusammen mit dem Lenkrad und den Bedienelementen angeordnet ist und der eine zweite, nach vorne auskragende Konsole enthält, auf der die Pedale angeordnet sind. Nachteilig bei diesem Sitz ist, daß er einen relativ hohen Bauaufwand hat.

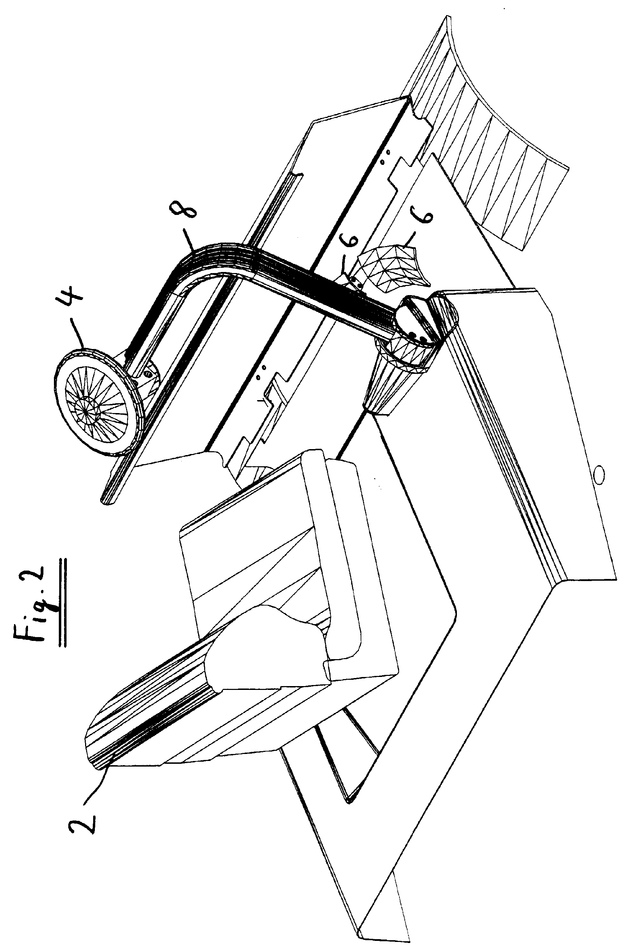

Aus der DE 29 40 033 A1 ist ein Gabelstapler mit einem Fahrersitz bekannt, der in Normalposition um einen Winkel von 0° bis 30° zur Fahrzeuglängsachse schräg gestellt und um eine vertikale Drehachse um einen Winkel bis zu 90° verschwenkbar gelagert ist. Dieser Gegenstand bildet den Oberbegriff des Anspruchs 1. Nachteilig bei dieser Ausführung ist, daß entweder zwei Pedalsätze gebraucht werden (Figur 2), oder aber (Figur 1), wenn mit einem Pedalsatz gearbeitet wird, die Pedale relativ schlecht zugänglich sind. Besonders, wenn der Fahrer den Schwenksitz relativ weit verschwenkt, ist eine ergonomische Bedienung der Pedale nicht mehr möglich.

Aufgabe der Erfindung ist es daher, einen Gabelstapler mit Schwenksitz derart auszubilden, daß er einerseits preisgünstig in der Herstellung ist und andererseits ein ergonomisch richtiges Bedienen bei Verwendung nur eines Pedalsatzes zuläßt.

Diese Aufgabe wird erfindungsgemäß gelöst von einem Gabelstapler, bei dem die Schwenkachse des Sitzes im Bereich der Sitzvorderkante oder knapp vor dem Sitz und auf der rechten Seite des Sitzes angeordnet ist.

Dank der erfindungsgemäßen Anordnung der Schwenkachse ist es nunmehr möglich, den Pedalsatz mit den Füßen zu bedienen, ohne gegen ergonomische Forderungen zu verstoßen. Weiterhin ist das Verschwenken des Sitzes nunmehr dadurch einfach möglich, daß der Fahrer mit dem linken Bein durch Anwinkeln des Knies eine Drehbewegung nach rechts oder durch Strecken des Knies eine Sitzdrehung nach links einfach vollführen kann. Im Gegensatz zu der Lösung mit einer Plattform für die Füße, bei der der Fahrer dann mit den Händen einen Festpunkt suchen muß, in den er die Kräfte einleiten kann, um den Sitz zu verdrehen, ist hier eine elegante Lösung gefunden worden, die eine häufige Verschwenkung des Sitzes auch realistisch macht. Es hat sich nämlich herausgestellt, daß der Fahrer lieber den Kopf etwas weiter nach hinten dreht, als daß er eine zu aufwendige Mechanik zum Verschwenken des Sitzes benutzt.

In einer Ausführungsform der Erfindung ist die Schwenkachse auf oder in der Nähe der Fahrzeuglängsachse angeordnet. Dies hat zur Folge, daß die Sitzmittellinie oder der Sitzschwerpunkt etwas links von der Fahrzeuglängsachse ist. Wenn dann die Pedale etwas rechts von der Fahrzeuglängsachse angeordnet sind, ergibt sich automatisch ein richtiges Sitzen für den Fahrer. Insbesondere in der Ausführung, in der in Normalstellung der Fahrer etwas schräg auf dem Fahrzeug sitzt (der Sitz ist also nicht bis zur Parallelität zur Fahrzeuglängsachse verdreht, sondern steht schon etwas nach rechts verdreht), ergibt sich für den Fahrer eine entspannte Haltung zum Fahren. Als günstig ergibt es sich hier, wenn der Pedalsatz etwas schräg gestellt ist. Der Fahrer kann dann in allen Schwenkstellungen des Sitzes gut auf die Pedale zugreifen. Er muß die Füße nicht verdrehen und kann mit dem rechten Fuß entweder das Gas oder die Bremse bedienen, während mit dem linken Fuß oder dem Spielbein eine ganz zwanglose Verdrehung des Fahrersitzes möglich ist. Sein Spielbein ruht ja immer auf der Bodenfläche neben den Pedalen.

In einer weiteren Ausführungsform ist das Lenkrad nicht am Sitz befestigt, sondern fahrzeugfest an einem Bügel, der das Lenkrad in etwa in den Mittelbereich zwischen Sitz und Pedalen hält. Die Drehachse des Lenkrads kann parallel zur Fahrzeuglängsachse oder auch dagegen verkippt angeordnet sein.

Dieses Lenkrad schwenkt beim Verdrehen des Sitzes nicht mit. Der Fahrer kann auch das Lenkrad als fahrzeugfesten Punkt nehmen, um die Kraft zur Verdrehung seines Sitzes auf das Fahrzeug zu übertragen.

In einer Ausführungsform ist die Normalposition des Sitzes von oben her gesehen um ca. 10° nach rechts schräg gestellt. Dies hat zur Folge, daß die Fahrerblickrichtung nie zu weit von den schräg stehenden Pedalen entfernt ist, so daß stets ein entspanntes Fahren möglich ist. Beim Vorwärtsfahren dreht der Fahrer den Kopf dann leicht nach links, wobei die kleine Verdrehung des Kopfes nach links gegenüber der Normalposition des Körpers keine unangenehme Belastung ist. Zum Rückwärtsfahren verschwenkt er dann durch Bewegung des Spielbeines (linkes Bein) den Sitz nach rechts und kann den Sitz dann um bis zu 45° verdrehen, so daß das Rückwärtsblicken nur noch eine leichte Verdrehung des Kopfes nach rechts erfordert.

Weitere Vorteile, Merkmale und Ausgestaltungen der Erfindung ergeben sich aus der Beschreibung eines Ausführungsbeispiels anhand der Zeichnungen.

Es zeigen:
Figur 1 einen Draufblick auf einen erfindungsgemäßen Gabelstapler,
Figur 2 eine Schrägansicht des Arbeitsplatzes eines erfindungsgemäßen Gabelstaplers und
Figur 3 einen Draufblick auf einen erfindungsgemäßen Arbeitsplatz.

Figur 1 zeigt als schematische Zeichnung einen Gabelstapler, wobei links und rechts oben die Vorderräder angedeutet sind. Am Fahrerarbeitsplatz befindet sich der Fahrersitz 2. Vor ihm ist am Bügel 8 das Lenkrad 4 angeordnet. Im Bodenbereich befinden sich hier die Pedale 6, wobei das linke Pedal das Bremspedal, das rechte das Gaspedal ist. Zu erkennen ist eine leichte Schrägstellung des Sitzes 2, die in etwa der normal eingenommenen Vorwärtsfahrposition entspricht. Die Pedale 6 sind dann ohne Verdrehen der Beine gut erreichbar, weil sie sich direkt in Längsrichtung der Fahrersitzmittellinie befinden. Das Lenkrad 4 liegt ebenfalls ergonomisch günstig so, daß es mit der linken Hand bedient werden kann. Die Hebel für die Hydraulik sind im Griffbereich der rechten Hand angeordnet. Die Pedale stehen in dieser Ausführung in Winkeln von 20° bzw. 40° gegenüber der Fahrzeuglängsachse. Selbstverständlich sind andere Winkel möglich und im Rahmen der Erfindung.

Figur 2 zeigt die Ausführung der Figur 1 in einer Schrägsicht. Zu erkennen sind wiederum die leichte Schrägstellung des Sitzes 2 gegenüber der Fahrzeuglängsachse und die schräge Anordnung der Pedale 6 in einer rechten vorderen Ecke des Fußraums. Zu erkennen ist auch der Schwenkmechanismus für das Lenkrad 4, das am Bügel 8 angeordnet ist. Der Bügel 8 kann zum Aufsteigen nach vorne verschwenkt werden oder auch fest angeordnet sein.

Figur 3 zeigt einen Draufblick auf einen erfindungsgemäßen Gabelstapler, bei dem nunmehr exakt die Lage der Drehachse 10 des Fahrersitzes zu erkennen ist. Gezeigt ist nicht direkt der Fahrersitz, sondern zwei metallische Platten 2a, 2b, die die Lagerung des Fahrersitzes bilden. Die Platte 2b ist fahrzeugfest auf dem Rahmen des Fahrzeugs verschraubt, die Platte 2a ist um die Drehachse 10, die dann auch die Drehachse des Fahrersitzes bildet, schwenkbeweglich mit der Platte 2b verbunden. Die Platte 2a ist der Sitzträger, auf der der Fahrersitz dann mit den üblichen Verstellbarkeiten vor/zurück, Neigung usw. angeordnet ist. Zu erkennen ist, daß die Drehachse 10 in dieser Ausführung genau auf der Fahrzeuglängsachse 12 verläuft. Der Sitzmittelpunkt ist also in jeder der Stellungen etwas links von der Fahrzeuglängsachse. In den bevorzugten Ausführungen sind die Verschwenkbewegungen zwischen 10° und 45°, wobei auch Verschwenkungen um 20° oder 40° oder andere Werte möglich sind, so daß der Fahrer stets die etwas schräg gestellten Pedale 6 gut erreichen kann. Die Anordnung der Pedale 6 ist in Figur 3 ebenfalls gut zu sehen, wobei hier auch die Pedalträger eingezeichnet sind.

Anhand der Figur 3 ist auch zu erkennen, daß diese Ausführung konstruktiv sehr einfach und preisgünstig ist. Im Gegensatz zu bekannten Lösungen, die einen Mast oder ein Verschwenken der Pedale oder einen zweiten Pedalsatz erfordem, ist diese Lösung hier äußerst preisgünstig. Die Schrägstellung der - sowieso vorhandenen - zwei Pedale erfordert keinen teuren Umbau. Ebenso ist die drehbare Ausführung des Fahrersitzes mit der fahrzeugfesten Platte 2b und mit oder ohne Sitzträgerplatte 2a mit einem Drehgelenk relativ günstig. Noch preisgünstiger ist die Ausführung, bei der das Drehgelenk, welches an der Drehachse 10 sitzt, nicht das gesamte Gewicht des Sitzes trägt, sondern bei der zusätzlich Rollen vorgesehen sind, die im mittleren oder im hinteren Bereich des Sitzes das Gewicht des Fahrers und des Fahrersitzes von der Platte 2a auf die Platte 2b übertragen.

Die erfindungsgemäße Anordnung der Drehachse 10 an der Sitzvorderkante oder knapp davor und unterhalb des rechten Oberschenkels erlaubt nun ein leichtes Verschwenken des Sitzes mit dem linken Bein, wobei der linke Fuß auf der Bodenplatte links neben den Pedalen 6 ruht. Will der Fahrer zum Rückwärtsfahren den Sitz verdrehen, so kann er mit dem linken Fuß eine Zugbewegung durchführen (Knie anwinkeln), so daß der Fahrersitz sich leicht nach rechts verschwenkt und der Fahrer zum Rückwärtsfahren den Kopf nicht so weit nach rechts verdrehen muß. Zum Vorwärtsfahren muß der Fahrer nur das linke Bein strecken und der Sitz verschwenkt sofort wieder in die andere Endlage, wobei in beiden Endlagen leichte Arretierungen vorgesehen sein können. Diese Arretierungen sollten jedoch so leicht überwindbar sein, daß der Fahrer durch Abknicken des linken Beines oder auch durch eine Zugbewegung am fahrzeugfesten Lenkrad mit der linken Hand den Sitz verdrehen kann.

## Patentansprüche

1. Gabelstapler, insbesondere Frontgabelstapler, mit einem Fahrersitz (2), der in Normalposition um einen Winkel von 0° bis 30° zur Fahrzeuglängsachse (12) schräg gestellt und um eine vertikale Drehachse (10) um einen gewissen Winkel bis zu maximal 90° verschwenkbar gelagert ist, **dadurch gekennzeichnet**, daß die Drehachse (10) im Bereich der Sitzvorderkante oder knapp vor dem Sitz (2) und auf der rechten Seite des Sitzes (2) angeordnet ist.

2. Gabelstapler nach Anspruch 1, **dadurch gekennzeichnet**, daß die Drehachse (10) auf oder in der Nähe der Fahrzeuglängsachse (12) angeordnet ist.

3. Gabelstapler nach Anspruch 1 oder Anspruch 2, **dadurch gekennzeichnet**, daß nur ein Pedalsatz (6) vorhanden ist, der ebenfalls schräg gestellt ist.

4. Gabelstapler nach einem der vorhergehenden Ansprüche, **dadurch gekennzeichnet**, daß das Lenkrad (4) fahrzeugfest angeordnet ist.

5. Gabelstapler nach einem der vorhergehenden Ansprüche, **dadurch gekennzeichnet**, daß die Normalposition von oben gesehen um ca. 10° nach rechts schräg gestellt ist.
